**Europäisches Patentamt**

**European Patent Office**

**Office européen des brevets**

(11) Veröffentlichungsnummer : **0 040 668**
**B1**

(12) **EUROPÄISCHE PATENTSCHRIFT**

(45) Veröffentlichungstag der Patentschrift :
**07.12.83**

(21) Anmeldenummer : **81101168.3**

(22) Anmeldetag : **19.02.81**

(51) Int. Cl.³ : **B 01 J 12/00**, B 01 J 15/00,
B 01 J 35/04, B 01 J 19/18

(54) **Adiabatischer Gasreaktor.**

(30) Priorität : **23.05.80 DE 3019730**

(43) Veröffentlichungstag der Anmeldung :
**02.12.81 Patentblatt 81/48**

(45) Bekanntmachung des Hinweises auf die Patenterteilung : **07.12.83 Patentblatt 83/49**

(84) Benannte Vertragsstaaten :
**BE DE FR GB IT NL**

(56) Entgegenhaltungen :
**CH-A- 566 807**
**DE-A- 2 203 592**
**DE-A- 2 226 344**
**DE-A- 2 324 164**
**DE-A- 2 834 358**
**DE-A- 2 942 359**
**US-A- 3 983 283**

(73) Patentinhaber : **Röhm GmbH**
**Kirschenallee Postfach 4242**
**D-6100 Darmstadt 1 (DE)**

(72) Erfinder : **Siegert, Hermann-Josef, Dr.**
**Inselstrasse 21**
**D-6100 Darmstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Adiabatischer Gasreaktor

Die Erfindung betrifft einen adiabatischen Gasreaktor, in dem das reagierende Gas im Kreislauf über einen fest angeordneten Katalysator geführt wird. Innerhalb des Gaskreislaufes ist kein Wärmeaustauscher zur Zu- oder Abführung von Reaktionswärme und keine Aufarbeitungsvorrichtung zur Entnahme bestimmter Bestandteile des Reaktionsgases vorgesehen. Bei hoher Umwälzrate, d. h. einem hohen Verhältnis des durch den Reaktionsraum geführten Gasstromes im Verhältnis zu dem zu- bzw. abgeführten Gasstrom, wird « Rührkesselverhalten » im Reaktor erreicht. Man bezeichnet damit einen Betriebszustand, bei dem Konzentrations- und Temperaturunterschiede in dem gesamten Reaktor äußerst klein werden und im theoretischen Grenzfall — nämlich bei unendlich hoher Umwälzrate — gänzlich verschwinden. Wegen der nur differentiellen Änderung der Betriebszustände im Reaktor spricht man auch von einem Differential-Reaktor. Differential-Reaktoren sind bisher nur im Laboratoriumsmaßstab bekannt und dienen ausschließlich dazu, die Kinetik von Gasreaktionen zu untersuchen.

Bei einem bewährten Aufbau von Differential-Reaktoren ist das Katalysatormaterial in körniger Form als Schüttung in einem zylindrischen Reaktionsraum angeordnet. Das aus dem Reaktionsraum austretende Reaktionsgas wird auf ein Radialgebläse geleitet, welches das Reaktionsgas in dem Ringraum zwischen dem zylindrischen Reaktionsraum und der äußeren Reaktorwandung zur Eintrittskammer vor dem Reaktionsraum zurückführt. Ein Teil des Reaktionsgases kann kontinuierlich entnommen werden, während an einer anderen Stelle des Reaktors frisches Reaktionsgas kontinuierlich zugeführt wird.

Beim Durchströmen der Katalysatorschüttung erleidet das Reaktionsgas einen Druckverlust, der allerdings bei den bekannten Laboratoriumsgeräten dieser Art vernachlässigbar klein ist. Auch spielt die Leistungsaufnahme der Gasumwälzpumpe bei dieser Größenordnung keine Rolle. Die technische Anwendung von Differential-Reaktoren für heterogene Gasreaktionen ist zwar nicht bekannt. Für den Fachmann ist es jedoch erkennbar, daß der Druckverlust an der zu durchströmenden Katalysatorschüttung beträchtlich sein und eine Gasumwälzpumpe von erheblicher Leistung erforderlich machen würde. Ein dem Rührkesselverhalten nahekommender Betriebszustand, der den gleichen Druck im gesamten Reaktionsraum voraussetzt, wäre im großtechnischen Maßstab unerreichbar.

Ein adiabatischer Reaktor für heterogene Gasreaktionen ist aus der DE-OS 23 24 164 bekannt. Auch hier wird ein Teil des Reaktionsgases im Kreislauf geführt. Um den Druckverlust beim Durchströmen des Katalysatorbettes gering zu halten, ist der Katalysator in einem ringförmigen Katalysatorraum angeordnet, der radial durchströmt wird. Der Gaskreislauf wird mittels des durch eine Düse eingeblasenen Frischgases in Bewegung gehalten. Wegen des beschränkten Wirkungsgrades einer solchen Gasumlaufvorrichtung ist der Volumenanteil des rückgeführten Reaktionsgases verhältnismäßig gering. Der Betriebszustand des Reaktors ist daher vom idealen Rührkesselverhalten weit entfernt.

D. Arntz und F. Fetting (Chemie-Ing.-Technik MS 722/79) haben eine Versuchsanordnung beschrieben, bei der ein Reaktionsgas über einen Wabenkatalysator und mehrere Wärmetauscher im Kreislauf geführt wird. Die Anlage wird nicht adiabatisch betrieben und dient der reaktionskinetischen Untersuchung von Wabenkatalysatoren.

Ein großtechnischer Gasreaktor, der mit geringem Druckverlust arbeitet, ist aus der DE-OS 28 34 358 bekannt. In dem Reaktor sind mehrere Gruppen von Katalysatoren in Strömungsrichtung hintereinander angeordnet, wobei jede Gruppe aus einer Vielzahl von parallel im Abstand zueinander angeordneten plattenförmigen Katalysatorträgern besteht, die parallel zu den Plattenflächen durchströmt werden. Die plattenförmigen Katalysatorträger einer Gruppe stehen jeweils rechtwinklig zu denen der benachbarten Gruppen, so daß der gesamte Strömungsquerschnitt rasterartig in eine Vielzahl von geradlinigen, durchgehenden, offenen, seitlich untereinander verbundenen Kanälen aufgeteilt ist. Ein Kreislauf des Reaktionsgases ist bei diesem bekannten Reaktor nicht vorgesehen.

Der Erfindung liegt die Aufgabe zugrunde, bei einem adiabatischen Gasreaktor mit Reaktionsgaskreislauf den Druckabfall beim Durchströmen des Reaktionsraumes herabzusetzen und dadurch die Leistungsaufnahme der Gasumwälzpumpe zu vermindern. Eine Lösung der gestellten Aufgabe wurde in dem Reaktor gemäß Anspruch 1 gefunden. Der verwendete Katalysatorträgerkörper wird auch als Monolith- oder Wabenkatalysator bezeichnet ; vgl. Ullmanns Enzyklopädie der technischen Chemie, 4. Aufl. Bd. 13, S. 561-62. Wabenkatalysatoren werden überwiegend zur Abgasentgiftung und -Verbrennung verwendet, sind jedoch noch nicht in technischen Anlagen zur Erzeugung von chemischen Umsetzungsprodukten angewandt worden. Von herkömmlichen Rohrbündelreaktoren, die ebenfalls von geradlinigen, den Katalysator enthaltenden Kanälen durchzogen sind, unterscheiden sich Wabenkatalysatoren dadurch, daß die geradlinigen durchlaufenden Kanäle offen sind und daß das aktive Katalysatormaterial nur in bzw. auf der Wandung der Kanäle angeordnet ist. Die offenen Kanäle werden mit geringem Druckverlust durchströmt. Der Strömungswiderstand hängt von der Feinstruktur ab und beträgt vorzugsweise höchstens 0,3 bar, insbesondere weniger als 0,1 bar pro Meter Wabenkörperlänge, gemessen bei einer Gasgeschwindigkeit (Leerrohrgeschwindigkeit) von 500 m/min bei 260 °C für Luft.

Der erfindungsgemäße Reaktor kann in einem Betriebszustand betrieben werden, der dem ideal durchmischten Rührkessel weitgehend angenähert ist. Dadurch ist es möglich, die gesamte Umsetzung bei oder nahe dem Optimum der Umsetzungsbedingungen ablaufen zu lassen. Im Gegensatz dazu heizt sich das Gasgemisch in einem herkömmlichen Rohrreaktor immer weiter auf und entfernt sich dabei von dem optimalen Betriebspunkt. Mit zunehmender Gastemperatur können zunehmend unkontrollierte Nebenreaktionen auftreten. Dabei wird weitere Reaktionswärme frei, so daß die Überhitzung lawinenartig anschwillt. Es entstehen in dem Reaktionsraum Inseln von stark erhöhter Temperatur, in der Fachsprache auch als « hot spots » bezeichnet, an denen nicht nur ein Teil der Ausbeute verloren geht, sondern oft auch die Aktivität des Katalysators irreversibel geschädigt wird. Diese Gefahr läßt sich vermeiden, wenn man das Reaktionsgas mit erheblichen Mengen an inerten Moderatorgasen, wie Stickstoff, Wasserdampf oder Kohlendioxid, verdünnt. Bei Verwendung des erfindungsgemäßen Reaktors kann auf Moderatorgase verzichtet werden, ohne daß die Gefahr einer allgemeinen oder lokalen Überhitzung besteht.

Ein weiterer Vorteil besteht in der unmittelbaren Verwertung der Reaktionswärme zum Aufheizen des kontinuierlich zugeführten Frischgases auf die Reaktionstemperatur. Beim Zumischen des kalten Frischgases in den Gaskreislauf wird dessen Temperatur nur differentiell erniedrigt. Beim Durchgang durch den Reaktionsraum wird das Gasgemisch um den gleichen differentiellen Betrag wieder aufgeheizt. In analoger Weise ändern sich die Konzentrationen der Ausgangs- und Endstoffe durch das Zumischen von Frischgas und die Umsetzung im Reaktionsraum jeweils nur um differentielle Beträge.

Man erreicht optimale Umsetzungsbedingungen, insbesondere eine hohe Selektivität und Ausbeute, in der Regel bei weitgehender Annäherung an den Zustand des ideal durchmischten Rührkessels. Bei einer allmählichen Verminderung des Verhältnisses des Gasumlaufs zur Frischgaszufuhr werden Ausbeute und Selektivität in der Regel zunächst nur wenig beeinträchtigt und sinken beim Unterschreiten einer bestimmten, reaktionstypischen Umwälzrate stark ab. Um die Leistungsaufnahme der Gasumwälzpumpe so niedrig wie möglich zu halten, wird im allgemeinen dicht über dem genannten Grenzwert der Umwälzrate gearbeitet. In der Praxis wird vorzugsweise mit einem Umwälzverhältnis von 3-100 Volumenteilen Kreislaufgas je Volumenteil Frischgas gearbeitet. Der bevorzugte Arbeitsbereich liegt bei einem Umwälzverhältnis zwischen 5 und 25.

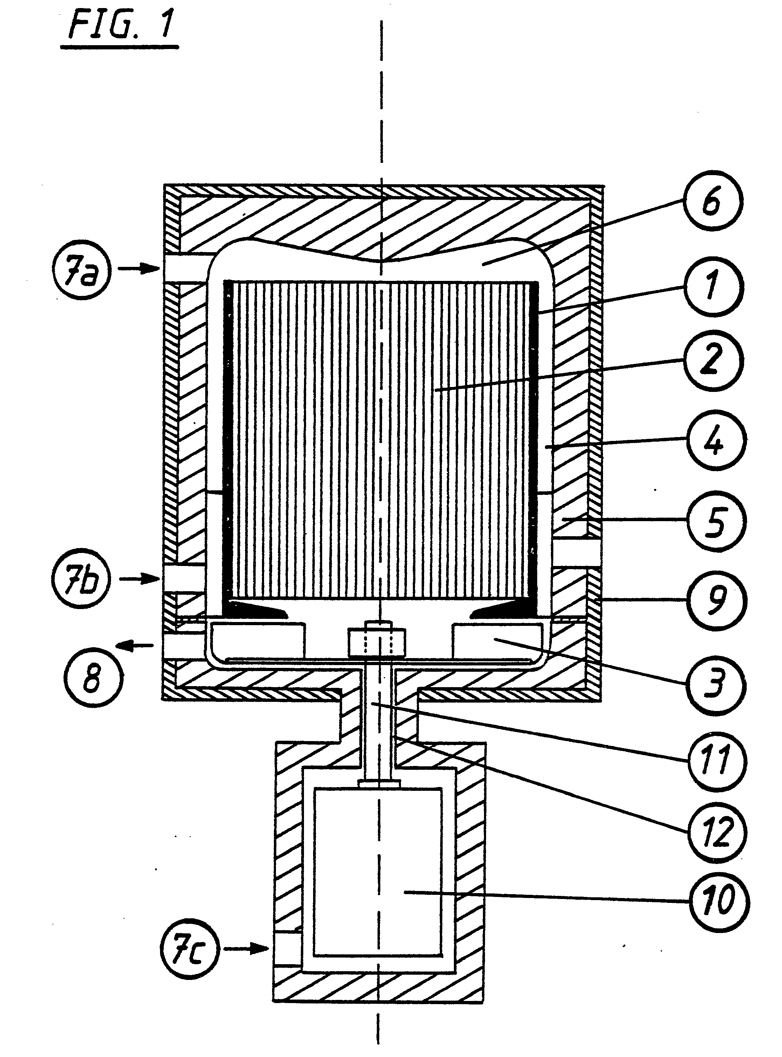

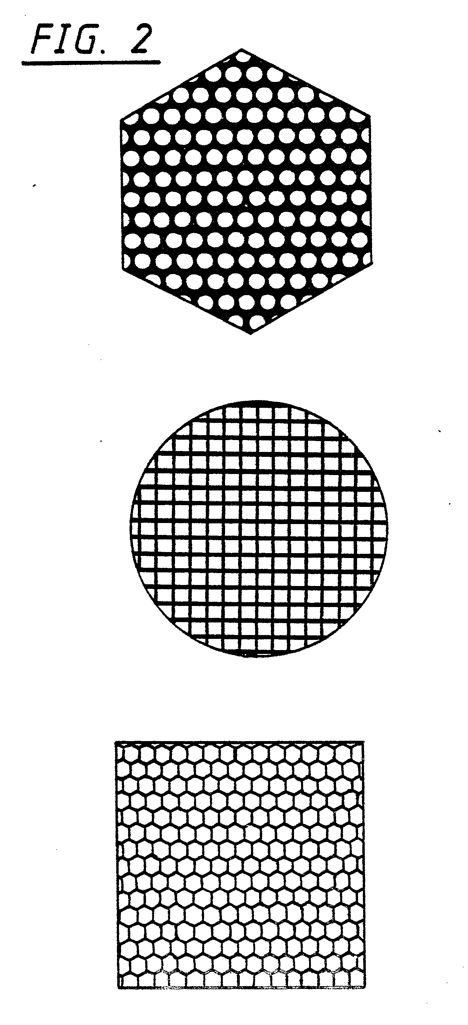

Eine zweckmäßige Gestaltung des erfindungsgemäßen Reaktors ist in den Figuren 1 und 2 dargestellt.

Figur 1 zeigt in einem axialen Schnitt einen zylindrischen Reaktor.

Figur 2 zeigt einen Querschnitt durch den Wabenkatalysator.

In dem zylindrischen Reaktionsraum (1) ist der Wabenkatalysator (2) in der Weise angeordnet, daß die geradlinigen Kanäle parallel zur Zylinderachse verlaufen. Der Raum zwischen dem unteren Ende des Wabenkatalysators und dem Radialgebläse (3) stellt gleichzeitig den Ausgangsraum des Reaktionsraumes und den Verbindungskanal zur Saugseite der Gasumwälzpumpe dar. Der Ringraum (4) zwischen dem Reaktionsraum und der äußeren Wandung (5) des Reaktors stellt den Verbindungskanal zum Eingangsraum (6) des Reaktionsraumes dar. In den Eingangsraum (6) mündet die Frischgaszufuhrleitung (7a). Eine gleichmäßigere Durchmischung des Frischgases mit dem rückgeführten Reaktionsgas wird erreicht, wenn das Frischgas an einer oder mehreren Stellen (7b) in den Ringraum (4) eingeführt wird. Über die Leitung (8) wird Reaktionsgas abgeführt.

Um eine weitgehend adiabatische Betriebsweise zu gewährleisten, kann die Reaktorwand (5) mit einer Isolierschicht (9) umkleidet sein. Bei der Verwendung des Reaktors für stark exotherme Reaktionen ist eine wirksame Wärmeisolierung oft nicht erforderlich, d. h. man kann von der streng adiabatischen Betriebsweise etwas abweichen. Das Radialgebläse (3) wird mittels einer Antriebsvorrichtung (10) über eine Welle (11), die durch die Reaktorwand und die Isolierung (9) führt, angetrieben. In manchen Fällen ist es zweckmäßig, das Frischgas oder einen Teil oder eine Komponente desselben über den Wellenschacht (12), in welchem die Welle (11) läuft, in den Reaktor einzuführen (7c).

Je nach der Größe und der Art der durchzuführenden Reaktionen kann der erfindungsgemäße Reaktor abweichend von der obigen Gestaltung ausgeführt werden. Beispielsweise kann es zweckmäßiger sein, die Verbindungskanäle in Form von separaten Rohrleitungen außerhalb des eigentlichen Reaktorgehäuses verlaufen zu lassen. Ebenso kann die Gasumwälzpumpe an einer beliebigen Stelle außerhalb des Reaktorgehäuses in den Verbindungskanal eingebaut sein. Die Gasumwälzpumpe kann nach jedem bekannten Prinzip der Beförderung von Gasen arbeiten ; neben den schon erwähnten Radialgebläsen kommen beispielsweise Axialgebläse oder Drehkolbenpumpen in Betracht.

Als Reaktionsraum wird jeweils eine Einheit eines aus vielen Einzelkanälen aufgebauten Wabenkatalysators betrachtet. Der erfindungsgemäße Reaktor kann eine Mehrzahl oder Vielzahl von neben- bzw. hintereinander angeordneten Reaktionsräumen enthalten.

Wabenkatalysatorträger werden nach dem Extrusions- oder dem Wickelverfahren aus üblichen Trägermaterialien hergestellt, z. B. aus Aluminiumoxid, Siliciumdioxid, Siliciumcarbid, Mullit, Cordierit, Spondumen oder Zirkonoxid. Übliche Querschnittsformen sind in Figur 2 dargestellt. Der Durchmesser einer Einheit liegt in der Regel zwischen 5 und 50 cm. Wenn der Querschnitt quadratisch, drei- oder sechseckig ist, kann eine Vielzahl von derartigen Einheiten zu einer großen Querschnittsfläche gebündelt werden. Jede einzelne Einheit enthält eine Vielzahl von Einzelkanälen mit Durchmessern zwischen 0,5 und 10 mm. Die Kanäle sind durch dünne Wände voneinander getrennt ; übliche Wandstärken liegen zwischen 0,1 und 3 mm. Bei extrem dünnen Wänden von z. B. 0,1 mm ist eine zugängliche Oberfläche bis zu 40 cm² je cm³ bei einer freien Anströmfläche bis zu 80 % der gesamten Querschnittsfläche erreichbar. Die Länge der einzelnen Einheiten ist bei der Herstellung durch Extrusion kaum begrenzt. Längen von einem oder mehreren Metern sind erreichbar ; noch größere Längen lassen sich durch Hintereinanderschalten mehrerer Einheiten verwirklichen.

Die katalytisch aktive Substanz wird bei nichtporösen Trägerkörpern nur auf die Innenwände der Kanäle aufgebracht und kann bei porösen Trägern zusätzlich auch in das Wandmaterial selbst eingelagert werden. Die Arbeitsgänge des Imprägnierens oder Auffällens und des anschließenden Trocknens und Kalzinierens entsprechen denen von anderen üblichen Katalysatorträgern. Vorteilhaft ist es, den Wabenkörper während der Imprägnierung oder Auffüllung in der Achse der Strömungskanäle zu schwenken, um eine örtlich gleichmäßige Belegung zu erzielen.

Als katalytisch aktives Material können alle Stoffe eingesetzt werden, die als Katalysatoren für heterogene Gasreaktionen wirksam sind. Beispiele typischer Katalysatoren sind Metalle, wie Nickel, Silber und Platinmetalle, Metalloxide wie Vanadin-, Eisen-, Chrom-, Mangan-, Uranoxide, ferner Heteropolysäuren wie Phosphorwolframsäure oder Phosphormolybdänsäure und deren Salze, z. B. Vanadin- oder Eisensalze, und Mischkatalysatoren aus einer Mehrzahl von metallischen und nichtmetallischen Elementen.

**Ansprüche**

1. Adiabatischer Gasreaktor, bestehend aus wenigstens einem Reaktionsraum (1), in dem ein fester Katalysator auf einem Trägerkörper zwischen einem Eingangsraum (6) und einem Ausgangsraum angeordnet ist, wobei der Trägerkörper von im wesentlichen geradlinigen, durchgehenden, offenen Kanälen durchzogen ist, deren Enden in den Eingangs- bzw. Ausgangsraum münden und deren Wandungen mit dem aktiven Katalysatormaterial beladen sind, sowie aus wenigstens einer Gaszufuhr- (12) und einer Gasabführungsleitung (8), dadurch gekennzeichnet, daß der Reaktor mit einer Gasumwälzpumpe (3), welche das Reaktionsgas im Kreislauf führt, und Verbindungskanälen (4) ausgerüstet ist, die unmittelbar vom Ausgangsraum des Reaktionsraumes zur Saugseite der Gasumwälzpumpe und von der Druckseite der Gasumwälzpumpe zum Eingangsraum des Reaktionsraumes führen, und daß der Trägerkörper des Katalysators als Wabenkörper gestaltet ist.

2. Gasreaktor nach Anspruch 1, dadurch gekennzeichnet, daß der Katalysatorträgerkörper einen Strömungswiderstand von höchstens 0,3 bar pro Meter wabenkörperlänge (gemessen bei einer Gasgeschwindigkeit von 500 m/min bei 260 °C für Luft) hat.

3. Gasreaktor nach den Ansprüchen 1 und 2, dadurch gekennzeichnet, daß der Reaktionsraum, die Gasumwälzpumpe und die Verbindungskanäle in einem gemeinsamen Reaktorgehäuse angeordnet sind.

**Claims**

1. Adiabatic gas reactor consisting of at least one reaction chamber (1) in which a solid catalyst is disposed on a support member between an entry chamber (6) and an exit chamber, the support member being penetrated by substantially straight, continuous, open channels the ends of which open into the entry or exit chamber and the walls of which are charged with the active catalysts material, and at least one gas supply line (12) and one gas discharge line (8), characterised in that the reactor is fitted with a gas circulating pump (3) which circulates the reaction gas, and with connecting channels (4) which lead directly from the exit chamber of the reaction chamber to the intake end of the gas circulating pump and from the delivery end of the gas circulating pump to the entry chamber of the reaction chamber and in that the support member for the catalyst is in the form of a honeycomb structure.

2. Gas reactor as claimed in claim 1, characterised in that the catalyst support member has a flow resistance of not more than 0.3 bar per metre of the length of the honeycomb structure (measured at a gas velocity of 500 m/min at 260 °C for air).

3. Gas reactor as claimed in claims 1 and 2, characterised in that the reaction chamber, the gas circulating pump and the connecting channels are disposed in a common reactor housing.

**Revendications**

1. Réacteur adiabatique pour gaz, se composant d'au moins une zone de réaction (1) dans laquelle un catalyseur fixe est disposé sur un corps porteur entre une chambre d'entrée (6) et une chambre de sortie, le corps porteur étant traversé par des passages ouverts, continus, essentiellement rectilignes, dont les extrémités débouchent respectivement dans la chambre d'entrée et la chambre de sortie et dont les parois sont garnies de la matière active du catalyseur, ainsi que d'au moins une conduite d'arrivée de gaz (12) et une conduite d'évacuation du gaz (8), caractérisé en ce qu'il est équipé d'une pompe de circulation du gaz (3) qui met le gaz en circulation en circuit fermé, et de passages de jonction (4) qui s'étendent directement de la chambre de sortie de la zone de réaction au côté aspiration de la pompe de circulation du gaz et du côté refoulement de la pompe de circulation du gaz à la chambre d'entrée de la zone de réaction, et en ce que le corps porteur du catalyseur est réalisé sous forme de corps en nid d'abeilles.

2. Réacteur pour gaz selon la revendication 1, caractérisé en ce que le corps porteur du catalyseur a une résistance à l'écoulement de 0,3 bar au maximum par mètre de longueur du corps en nid d'abeilles (mesurée à une vitesse du gaz de 500 m/mn à 260 °C pour l'air).

3. Réacteur pour gaz selon la revendication 1 ou 2, caractérisé en ce que la zone de réaction, la pompe de circulation du gaz et les passages de jonction sont disposés dans une enveloppe de réacteur commune.

FIG. 1

FIG. 2